# EUROPEAN PATENT SPECIFICATION

(11) **EP 1 978 430 B1**
(45) Date of publication and mention of the grant of the patent: **12.05.2010**
(21) Application number: 07105488.6
(22) Date of filing: 02.04.2007
(51) Int. Cl.: G05B 19/418, B62D 65/02, B60R 21/16, G06K 19/00

(54) **Occupant restraint system**
Rückhaltesystem für Fahrzeuginsassen
Système de retenue de l'occupant

(43) Date of publication of application: 08.10.2008
(73) Proprietor: Ford Global Technologies, LLC, Dearborn, MI 48126 (US)
(72) Inventor: Olsson, Tobias, SE-41758, Göteborg (SE); Gustavsson, Torbjörn, SE- 414 72 Göteborg (SE)
(74) Representative: Romare, Laila Anette

(56) References cited:
- DE-A1- 4 236 783
- JP-A- 7 185 968
- JP-A- 2002 327 351
- US-A- 4 774 757
- US-A1- 2005 057 023
- US-A1- 2005 285 377

## Description

### TECHNICAL FIELD

The present invention relates to a method for preventing twisting or incorrect positioning of an air bag assembly in an occupant restraint system during installation, or service of the airbag. More particularly, the present invention relates to a method for detecting if the inflatable airbag assembly has been correctly mounted in a predetermined location and/or to prevent twisting of an airbag, such as an inflatable curtain or similar. The invention further relates to an inflatable airbag arrangement and a computer readable storage device for use with said method.

### BACKGROUND ART

Occupant restraint devices, or airbags, are well accepted for use in motor vehicles and have been credited with preventing numerous deaths and injuries. Inflatable airbags are now commonly used in most new vehicles. Airbags are typically installed as part of a system with an airbag module in the steering wheel on the driver's side of a car and in the dashboard on the passenger side of a car. In the event of an accident, a sensor within the vehicle measures abnormal deceleration and triggers the ignition of an pyrotechnic charge contained within an inflator. Expanding gases from the charge travel through conduits and fill the airbags, which immediately inflate in front of the driver and passenger to protect them from harmful impact with the interior of the car.

For example, side impact airbag systems have also been developed in response to the need for similar protection from lateral impacts between a passenger and the side of a vehicle's interior. This might occur when another vehicle collides with the side of the car, or in a rollover situation where the side of the car is repeatedly impacting the ground. These airbags, which are commonly referred to as "inflatable cushions" or "inflatable curtains," may be mounted on or near the roof rail, or the portion of the frame that extends along a length of the vehicle between the side windows and the roof.

Recently, airbag technology has continued to advance such that inflatable airbags curtains are now enlisted to provide roll-over protection as well as side impact protection. During a roll-over accident, the vehicle occupants can be jostled considerably, thereby causing the occupant to impact various parts of the vehicle interior. Even worse, the occupant may be ejected from the vehicle. Alternatively, a head or limb of an occupant may extend outside the vehicle during the roll-over. Such "occupant excursion" during roll-over accidents is a common cause of automotive fatality, particularly in the case of vehicle occupants that are not wearing a seat belt during the roll-over.

Conventional curtain airbags attempt to combat the dangers of side impact or roll-over accidents by providing impact protection and occupant retention. The airbag is typically compacted, i.e., folded, rolled, or processed through a combination of folding and rolling, to stow the cushion behind a headliner covering the interior of the roof of the vehicle. The curtain may be designed to unroll or unfold downward from the roof of the vehicle and then inflate beside the person as a means of preventing the person from hitting the door, window, or lateral side of the vehicle. Since a vehicle occupant may be leaning forward, reclined in the seat, or at any position in between, such curtain airbags are usually designed to be long enough to cover the whole interior side of the vehicle, protecting occupants in both front and rear passenger compartments.

Generally, the airbag must be sized to hold large volumes of inflation gas and to descend below the window sill. Consequently, when not inflated the airbag curtain includes a significant amount of material. This material is then rolled, folded, or otherwise gathered to form a tight, tubular bundle. A wrapper or cover (sometimes called a "sock") that fits around the curtain is then added to ensure that the airbag curtain is kept rolled or folded.

The stored curtain is then mounted either on or proximate a roof rail of the vehicle. Such mounting is generally accomplished via a two-step process. First, the curtain must be held in the proper position. This can be done by either having multiple workers hold the airbag or by attaching the airbag to sophisticated jigs, hooks, clips, or mounting brackets (collectively "brackets") that have been placed into slots in the body of the vehicle. Once the airbag curtain has been secured in the proper location, the workers are free to affix the airbag curtain assembly to the vehicle using fasteners such as bolts, screws, rivets, and the like. Usually these fasteners are threaded into one or more attachment tabs that have been added along the top of the airbag curtain to facilitate the assembly and mounting process. A metal gas guide that extends from the inflator is then connected to an inlet port of the airbag curtain.

Although inflatable airbag curtain systems have significantly increased the overall safety of the vehicle, problems and challenges still exist that limit the ability of airbag and vehicle manufacturers to implement and use airbag curtain s on all types of vehicles. One such problem relates to the fact that once the curtain has been rolled or folded into a tubular-shaped bundle, portions of the curtain tend to twist, kink, or become otherwise entangled. Twisting is particularly troublesome between the textile cushion/metal gas guide junction and the nearest mounting location to the roof rail. The twisting of the airbag curtain at this critical junction is detrimental because if a vehicle manufacturer installs the curtain in this twisted shape or the curtain is twisted during service, there is an increased likelihood that the curtain will fail, rip, deploy improperly, and/or otherwise malfunction during an accident. Vehicle occupants are endangered thereby.

US 7 125 038 discloses an inflatable curtain assembly provided with means to avoid twisting of the inflatable curtain. According to this solution, a stiffening member is located in a channel through the inflatable curtain imparting sufficient stiffness to prevent the inflatable curtain from twisting.

US 7 159 896 discloses an inflatable curtain assembly provided with a beltlike protrusion forms part of one side portion of the inflatable curtain, making it impossible to twist.

JP 2002327351 discloses fabric used for an air bag, which fabric is provided with a mark or pattern used during the making of the airbag and to assist in mounting the airbag. However, there is no indication as to how this mark could be used in detecting incorrect mounting of the finished airbag.

US 4774757 describes a part assembly system where a number of visual sensors detect the positions of reference points on a vehicle as it approaches an assembly station. The output of the sensors is used to position a part to be mounted relative to the vehicle prior to assembly of the part. The system is provided to ensure correct relative positioning of the vehicle and a component part to be assembled and does not perform a subsequent check for a possible incorrect assembly.

US 2005285377 describes a retainer for a side air bag chute comprising at least two retainer pieces with a bar code printed on each retainer pieces. Correct installation of the retainer is obtained when the bar code printed on each of at least two retainer pieces is aligned and complete. However, this arrangement does not allow for detection of an incorrect installation between individual retainers.

A problem with both of the above solutions is that they require additional components which are added to an airbag, such as an inflatable curtain assembly prior to mounting or during mounting thereof. As manufacturers incur costs for every moment that passes during the assembly process, even an increase of a few seconds or minutes in the assembly time represents a significant impact on the manufacturer's total production costs and overall profit margin of a mass-produced vehicle.

Accordingly, a need exists for an improved method for ensuring that an occupant restraint system has been incorrectly installed during production of a vehicle. It is particularly desirable that twisting of the curtain be prevented adjacent the junction of the textile inlet port of the curtain and the gas guide to the inflator. It is also desirable to prevent twisting of the airbag along its longitudinal length. It is further desirable that an occupant restraint system be installable without relying solely on the efforts of the installers to align the curtain properly without kinks, crimps or twists. It is also desirable for an occupant restraint system to be installable in a way that proper orientation of the gas guide and the airbag is achieved.

### DISCLOSURE OF INVENTION

The above problems have been solved by a method and an occupant restraint system according to the appended claims.

According to a preferred embodiment, the invention relates to a method for detecting correct positioning of an airbag in an occupant restraint system for a vehicle. The method may comprise the steps of:
- mounting an airbag having an inlet for connecting the airbag to an inflator in at least one mounting location for mounting the airbag in the vehicle;
- acquiring at least one digital input representing the mounted airbag from a digital sensing device;
- determining the presence of at least one digitally detectable indicator on a visible surface of the airbag;
- comparing an actual position of the indicator with a desired position;
- generating an error signal if an actual position does not correspond to a desired position.

As stated above, the invention relates to the position detection of an airbag in an occupant restraint system. The term "position detection" refers both to out-of-position detection and detection of airbags mounted in a twisted position. The latter case is particularly intended for airbags having a relative large longitudinal extension, such as inflatable curtains mounted proximate an internal surface of a roof rail connecting a front A-pillar and a rear C-pillar of the vehicle or external front or side impact airbags intended for pedestrians.

In this text, the wording "visible surface" on the airbag may refer to a surface on the inflatable surface itself or to a surface on an outer cover or sheath often used for facilitating handling and/or mounting of the airbag. The wording "hidden surface" refers to a surface that is normally not visible when the airbag is mounted.

The method according to the invention may involve determining the presence of said digitally detectable indicator or indicators on the airbag in predetermined locations on or along the airbag. Correct positioning of the airbag is then ascertained by comparing the actual position of the indicator in each location with a corresponding desired position. Incorrect positioning of the airbag may be then ascertained when the actual position does not correspond to the desired position. A deviation of the actual position may be allowable within predetermined tolerances. Incorrect positioning of the airbag may also be ascertained when the actual position can not be determined. In the latter case, the actual position cannot be compared to the desired position and consequently it does not correspond to a desired position. Hence an error signal is generated when an actual position can not be determined.

The term "digitally detectable indicator" refers to any type of visible indicator or marker that can be detected by means of a digital sensing device, such as a digital camera, a digital vision camera, a contrast sensor, a brightness sensor or a similar device. In this text the term "indicator" will be used. A more detailed description of such indicators can be found in the subsequent description.

According to one example, the presence of said indicator on the airbag is determined at least in locations corresponding to attachment points used for mounting the airbag to the vehicle and/or in intermediate locations between said attachment points. Alternatively, a number of predetermined reference points on the vehicle chassis may be used as locations for determining the presence and position of said indicator.

According to a further example, the method may be used for determining the presence of an indicator normally located on a hidden surface of the airbag. Such an indicator may be a symbol or a marking, such as a longitudinal line along a relatively long airbag, such as an airbag for an inflatable curtain, which indicator may also be given a characteristic colour. If the airbag is correctly mounted, this indicator will remain hidden. However, should the airbag become twisted then an image acquisition system, such as a camera connected to a digital image processor, may easily detect the indicator and generate an alarm signal.

According to the method at least one digital input comprising a digital representation of the mounted airbag is acquired by a digital signal or image processor. The digital signal or image processor may be integrated in a central processing unit provided for receiving, processing and/or storing data relevant for performing the method. The digital input comprises an output signal that can be acquired by and transmitted from a contrast or brightness sensor, a digital camera for capturing an image or a similar device. The digital input or the image may be acquired from within the vehicle, wherein a single image may be sufficient for detecting the positioning of the airbag. This can be achieved by mounting a camera on a robotic arm that is inserted through a suitable opening in the vehicle chassis.

Alternatively a number of digital inputs or images may be acquired by a sensor or a camera located outside the vehicle chassis. For instance, images may be acquired be a pair of stationary cameras or sensors located on either side of an assembly line. For airbags mounted in or on exterior sections of a vehicle, this camera or sensor arrangement is sufficient. For airbags mounted inside the vehicle, each camera may acquire images of the mounted airbag through side openings in the vehicle, as the vehicle is moved along the assembly line. In this case, the number of images is dependent on the field of view of the camera and the number of suitable openings, such as doors and/or windows in the vehicle. The digital input from a contrast or brightness sensor may be acquired in the same way.

In the example using a camera, the presence of at least one indicator on each image of the airbag is determined for each consecutive image. Similarly, the actual position of each indicator is compared with a desired position for each image.

The invention further relates to an occupant restraint system for use with the method as described above. The occupant restraint system may comprise an airbag, having an inlet for connecting the airbag to an inflator, and a predetermined number of attachments for mounting the airbag to a corresponding number of attachment points in or on a vehicle body. Further, the airbag may be provided with at least one digitally detectable indicator on at least one external area of the airbag. The at least one digitally detectable indicator may be an indicator on an area that is visible when the airbag is mounted.

According to a first example, the airbag may be an airbag for an inflatable curtain mounted proximate a roof rail of a vehicle. In this case, the indicator may comprise at least one longitudinal fold line on the outer surface of the airbag. Alternatively, the indicator may comprise at least one longitudinal fold line on the outer surface of the airbag, said fold line being visible through a transparent outer cover.

According to a second example, the indicator may comprise at least one marker with a predetermined shape and/or colour on the outer surface of an airbag, such as a rolled inflatable curtain or other types of airbags. The indicators may for instance comprise bar codes attached to or printed onto the airbag in a number of predetermined locations. The number of markers may preferably, but not necessarily, correspond to the number of attachment points. Indicators located in positions intermediate the attachment points may be used for indicating that a relatively long airbag, such as an inflatable curtain, is twisted. Indicators located adjacent attachment point may be used both for indicating that an inflatable curtain is twisted and/or for indicating that an attaching element for the airbag or inflatable curtain is missing or incorrectly mounted. In the latter case the indicator will be present, but out of position.

According to a third example, the at least one marker is a solid line or stripe along at least part of the length of a relatively long airbag, such as a rolled or folded inflatable curtain. One or more lines may have the same or different thicknesses, the same or different spacing, and/or the same or different colours. One or more such lines may extend along predetermined parts of, or along the entire length of the airbag.

According to a fourth example, a relatively long airbag, such as an inflatable curtain, may be provided with at least one indicator on an area that is hidden when the airbag is mounted. The indicator may be a symbol or a marking, such as a longitudinal line or stripe along the airbag, which indicator may also be given a characteristic colour. If the airbag is correctly mounted, this indicator will remain hidden. Should the airbag become twisted then this is immediately detected by an image acquisition system. For instance, an indicator that is intended to be hidden may be given a highly visible colour, such as a luminous or fluorescent colour.

According to a fourth example, the indicator may comprise a combination of at least one longitudinal fold line and at least one marker on the outer surface of a relatively long airbag, such as an inflatable curtain.

The method and the occupant restraint system of the present invention has been developed in response to the present state of the art, and in particular, in response to the problems and needs in the art that have not yet been fully solved by currently available inflatable airbag curtain assemblies. Thus, the present invention provides a method and an occupant restraint system that prevents twisting of the airbag at any point along its entire longitudinal length. Furthermore, the occupant restraint system of the present invention facilitates proper mounting and orientation of the airbag to the inflator assembly.

The invention further relates to a computer readable storage device to be used in conjunction with the method. The computer readable storage device may be integrated in or connected to the central processing unit used for processing the output from the digital sensing device. The computer readable storage device may contain stored data representing instructions executable by a computer, which computer readable storage device is intended for use with the method in particular for receiving and storing the input signal from the digital sensing device and/or the processed data or image indicating the state of the mounted airbag arrangement. The instructions stored on the computer readable storage device may comprise:
- instructions for receiving digital input signals from a digital sensing device,
- instructions for processing the digital input signals relating for determining the position of an airbag arrangement
- instructions for automatic storage of retrievable data relating to said position on a data carrier

The method further allows for automation of the checking procedure and for data logging of the correct positioning and mounting of one or more airbag arrangements for each individual vehicle. Subsequently, the computer readable storage device allows the digital input in the form of a sensor signal and/or one or more images, or the processed output conforming that the airbag is correctly mounted, to be digitally stored. The data can be stored on any suitable type of data carrier that accompanies each vehicle through the production facility, and/or on a remote data carrier or database for future reference. The stored data relating to each checking procedure is linked to the identity of the particular, individual vehicle being checked using a serial number, chassis number or a similar unique code or reference number. Data relating to the mounting of one or more airbag may be stored in this way. This allows for full traceability with respect to the mounting of the airbag arrangement for each individual vehicle.

These and other features and advantages of the present invention will become more fully apparent from the following description and appended claims, or may be learned by the practice of the invention as set forth hereinafter.

### BRIEF DESCRIPTION OF DRAWINGS

The invention will be described in detail with reference to the attached figures. It is to be understood that the drawings are designed solely for the purpose of illustration and are not intended as a definition of the limits of the invention, for which reference should be made to the appended claims. It should be further understood that the drawings are not necessarily drawn to scale and that, unless otherwise indicated, they are merely intended to schematically illustrate the structures and procedures described herein.
- Figure 1: shows a side view of the internal structure of a roof rail fitted with an airbag according to one example of the invention;
- Figure 2: shows an enlarged view of the airbag in Figure 1;
- Figure 3: shows a first example of an image indicating an incorrectly mounted airbag;
- Figure 4: shows a second example of an image indicating an incorrectly mounted airbag;
- Figure 5: shows a plan view of a schematic camera arrangement for implementing the method according to the invention.

### EMBODIMENTS OF THE INVENTION

The embodiments described below are mainly intended for occupant restraint systems comprising airbags having a relative large longitudinal extension, such as inflatable curtains mounted proximate an internal surface of a roof rail connecting a front A-pillar and a rear C-pillar of the vehicle or external front or side impact airbags intended for pedestrians. However, the invention is not limited to these examples and may be adapted to be implemented for any type of vehicle related airbag where automation of the procedure for checking correct mounting of the airbag is desired.

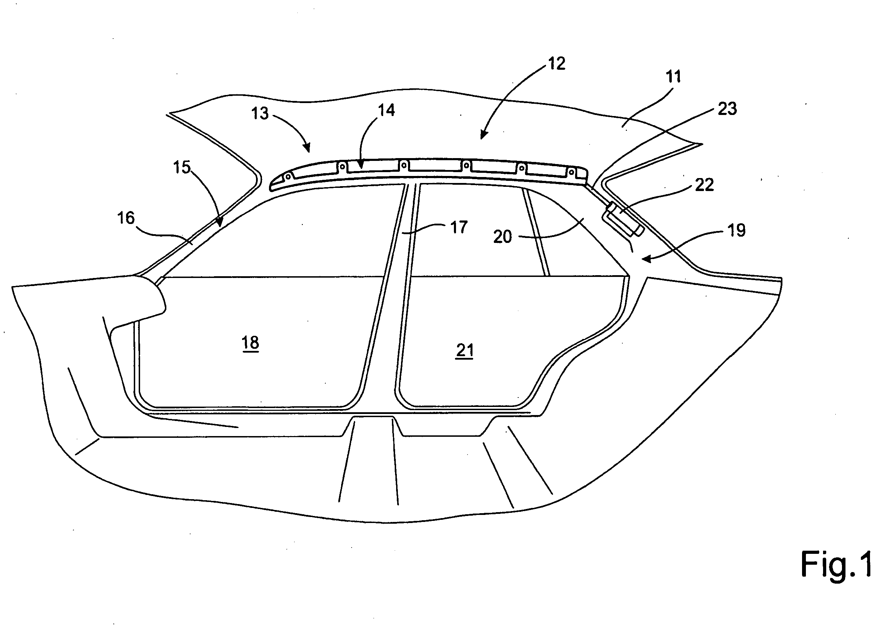

Figure 1 shows a side view of the internal structure of a passenger compartment in a vehicle body 11, where a roof side rail 12 is fitted with an occupant restraint system 13 comprising an inflatable curtain 14 to be checked by the method according to the invention. As shown in Figure 1, a side of the vehicle body 11 comprises a door opening 15 formed between front pillar 16 and a centre pillar 17 for mounting therein a front side door 18. A rear door opening 19 is formed between the centre pillar 16 and a rear pillar 20 for mounting therein a rear side door 21. The roof side rail 12 extends in a longitudinal direction of the vehicle body 11 and connects an upper end of the front pillar 16, an upper end of the centre pillar 17 and an upper end of the rear pillar 20. The roof side rail 12 defines upper edges of the door openings 15, 19 for the front side door 18 and the rear side door 21. The occupant restraint system 13 comprising the inflatable curtain 14 is provided along the roof side rail 12. The occupant restraint system 13 comprises a number of additional components, such as an inflator 22 and a gas guide 23 which extends between the inflator 22 and the inflatable curtain 14. The occupant restraint systems 13 are constructed substantially identically are provided on left and right sides of the vehicle body 11. In the text below, the occupant restraint system provided on the right side of the vehicle body will be described as representing both the systems.

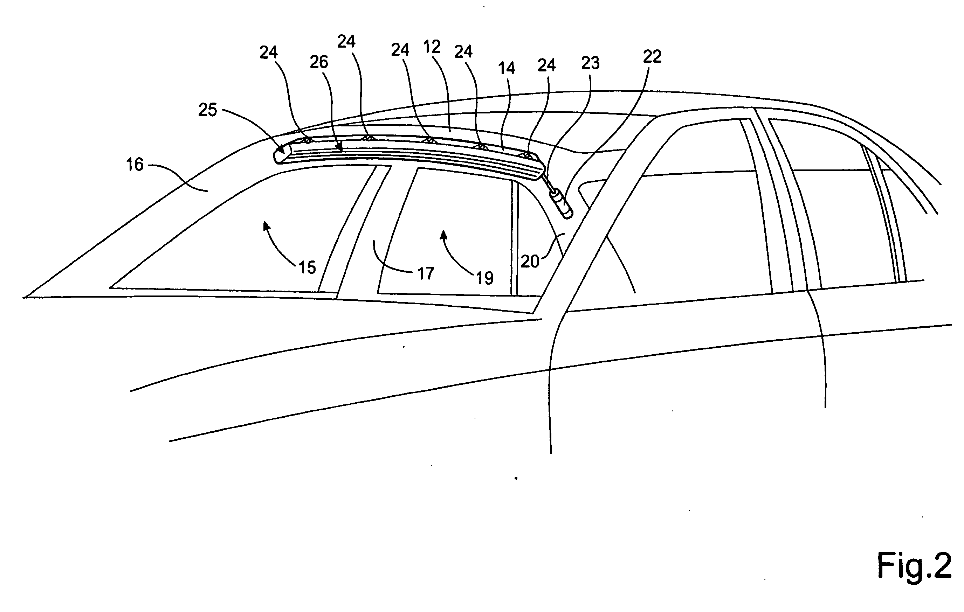

Figure 2 shows an enlarged view of the inflatable curtain 14 in Figure 1. This figure illustrates one possible view of an inflatable curtain 14 as seen by a single camera (not shown) arranged to be introduced through an opening for a door 15, 19 in order to acquire an image of the inflatable curtain 14. The camera can be introduced through the opening by a robotic arm (not shown) or a similar device.

According to this example, the occupant restraint system 13 comprising the inflatable curtain 14 has an inlet port that can receive a gas guide 23 which extends from an inflator 22, as shown in Figure 1. Figure 2 further shows that the inflatable curtain 14 has one or more mounting locations 24 for attaching the inflatable curtain on or proximate the roof rail 12 of the vehicle body 11. The mounting locations are attachment tabs 24 that have an opening through which a suitable fastener can be disposed when mounting the inflatable curtain 14 to the vehicle body 11. Alternatively, mounting clips, brackets, clamps, magnets, adhesives or the like can be used as attachments for or on the inflatable curtain for rigidly mounting the curtain to the vehicle.

The occupant restraint system 13 shown in Figure 2 comprises an inflatable curtain 14 that is typically configured of two pieces of semi-permeable material attached to each other by means known in the art. The pieces may be attached to each other at seams to form distinct chambers (not shown), each of which will retain inflation fluid such as gas produced by the inflator 22. The inflatable curtain 14 in this example is folded in a predetermined pattern, for instance as shown in US 5 775 733, wherein a number of fold lines are created along the entire length of the inflatable curtain 14. Alternatively, an inflatable curtain comprising a rolled airbag may be used, which airbag can be provided with an indicator in the form of a line, a stripe or other suitable indicator or marker.

The occupant restraint system 13 also includes a covering 25. The covering 25 is preferably configured to at least partially enclose the inflatable curtain 14 in a folded state. The covering 25 may be substantially as long as the inflatable curtain 14. The inflatable curtain 14 includes a plurality of attachment tabs 24 spaced along an edge of the inflatable curtain 14, the first attachment tabs 24 allow a portion of the occupant restraint system 13 to be secured to the interior of a vehicle. The attachment tabs 24 are configured with openings to receive a suitable fastener, such as a screw, bolt, rivet, pin and the like, for attaching the occupant restraint system 13 to the roof rail 12 of the vehicle body 11. In an alternative embodiment, the attachment tabs 24 can be attached to the vehicle interior by adhesive, bonding, welding, and the like. In the embodiment illustrated in Figure 2, the attachment tabs 30 extend from an edge of the inflatable curtain 12 in such a way that after the inflatable curtain 12 is arranged in a fully folded state, the inflatable curtain 12 can be attached to the roof rail 12 or another interior component of the vehicle body 11.

In an alternative example, a second attachment member (not shown) includes an adhesive attached to the covering 22, the strength of said adhesive is sufficient to make the covering 22 adhere to the vehicle body 11. The second attachment member can be used as an initial or an additional means of attaching the inflatable curtain 12 to the roof rail. The second attachment member may also include a clip attached to the covering 22 configured for attachment of, the covering 22 to the vehicle body 11. The second attachment member can be secured relative to the first attachment member 30 in a number of ways and still allow the occupant restraint system 13 to be pivoted into a more compact position. For instance, the second attachment members may be offset from the first attachment tabs 24. Furthermore, the number of second attachment members need not equal the number of first attachment tabs 24. At least one second attachment member should be spaced from the first attachment members is the transverse direction to allow for two separate longitudinal areas to be attached to the vehicle body 11. In this configuration, the outer side of the folded inflatable curtain 12 more closely conforms to the configuration of the vehicle body 11 to which the occupant restraint system 13 is being attached.

Figure 2 further shows the inflatable curtain 12 provided with an indicator 26 in the form of a number, in this case four, parallel lines. In the case where the inflatable curtain 12 is not provided with a cover 22, the indicator 26 can comprise the fold lines of the inflatable curtain 12 or markings applied onto the outer surface of the inflatable curtain 12. In the case where the inflatable curtain 12 is provided with an outer cover 22, the indicator 26 can comprise the fold lines of the inflatable curtain 12, indirectly visible through a transparent cover 22, or markings applied onto the outer surface of the cover 22.

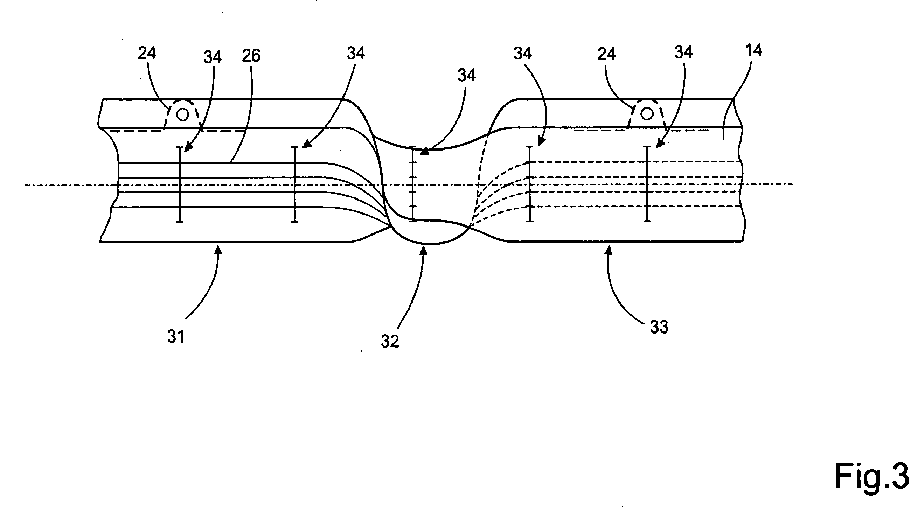

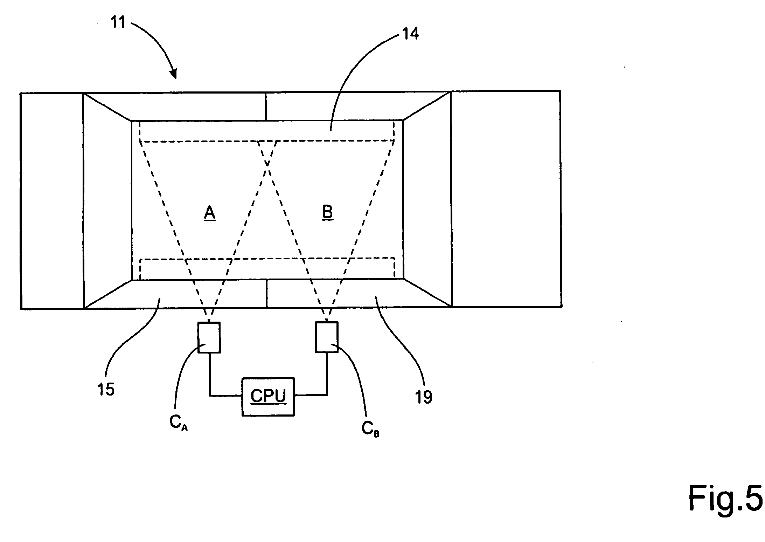

Figure 3 shows a first example of an image indicating an incorrectly mounted section of the inflatable curtain 14. The image is acquired by an imaging device, such as a digital camera, through a side opening, such as a door or window, of a vehicle, as shown in Figure 5. As can be seen from Figure 3, an indicator 26 in the form of a number of parallel lines extends along an outer, visible side of the inflatable curtain 14. In this example four lines of equal thickness and spacing are used, although the number of lines, thickness, spacing and colour can be selected freely within the scope of the invention.

As shown in Figure 3, a relatively thin and supple inflatable curtain 14 as use in this example may be unintentionally twisted during mounted. In this example the inflatable curtain 14 displays a first, correctly mounted section 31, a second, twisted section 32 and a third incorrectly mounted section 33. Even though the inflatable curtain 14 contracts in the longitudinal direction when twisted, the properties of the inflatable curtain 14 can still allow the distance between a pair of attachment tabs 24 situated on either side of the twisted portion of the inflatable curtain 14 to be maintained. Hence, the said pair of attachment tabs 24 can be fixed to the roof rail in spite of being twisted.

The inflatable curtain in Figure 3 is provided with a visible indicator 26 in the form of four parallel lines. When the inflatable curtain 14 is mounted correctly, these lines extend along the entire length of the inflatable curtain 14, as indicated in Figure 2. However, in Figure 3 the inflatable curtain 14 has been twisted, whereby the lines located beyond the twisted section 32 will be hidden from view (indicated by dashed lines in Figure 3) along the incorrectly mounted section 33. According to this example, a digital camera is used for acquiring an image representing the indicated sections 31, 32, 33 of the mounted inflatable curtain 14.

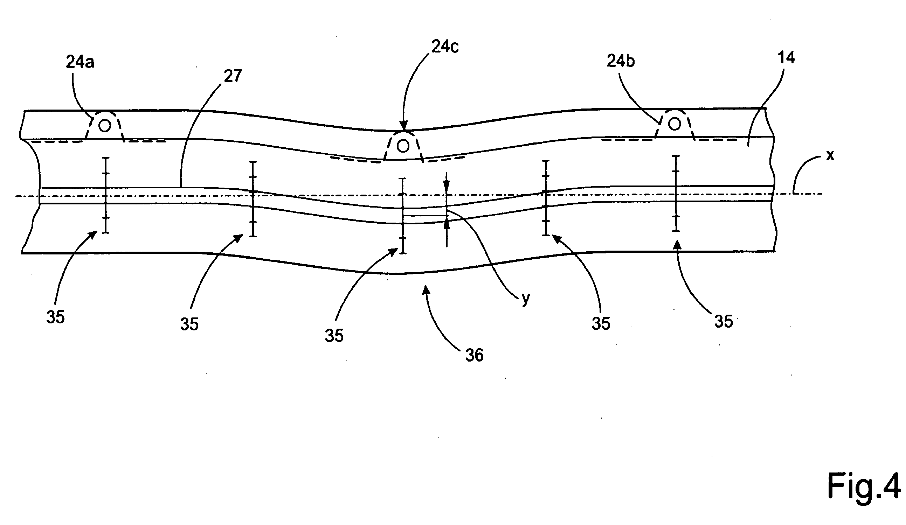

Figure 4 shows a second example of an image indicating an incorrectly mounted section of the inflatable curtain 14. The inflatable curtain in Figure 4 is provided with a visible indicator 27 in the form of a continuous stripe along the entire length of the inflatable curtain 14. When the inflatable curtain 14 is mounted correctly, the stripe 27 extends along the entire length of the inflatable curtain 14, similar to the lines indicated in Figure 2. However, in Figure 4 the inflatable curtain 14 has been incorrectly mounted, whereby the stripe located between a pair of correctly mounted attachment tabs 24a, 24b appears to sag a distance y below a reference axis X along an incorrectly mounted section 36. According to this example, a digital camera is used for acquiring an image representing the indicated section of the mounted inflatable curtain 14.

The captured image is transmitted to an input/output (I/O) module and processed by a digital image processor using software designed for this purpose. Suitable I/O modules and software for performing this operation can be supplied by Cognex^{™}. This processing is schematically illustrated in Figures 3 and 4, wherein a number of locator grids 34, 35 are superimposed on the image in the position of the inflatable curtain 14. The type or shape of the locator grids 34, 35 is selected to fit the indicator 26, 27 used. The locator grids 34, 35 in the examples of Figures 3 and 4 have been located in positions corresponding to the attachment tabs 24 as well as positions between the attachment tabs 24.

In the example of Figure 3, the digital image processor is first arranged to search for the lines making up the indicator 26. When the lines are present, the image processor can position the locator grids in a direction along an axis at right angles to the lines, so that each locator grid 34 overlaps the said lines in predetermined positions along the inflatable curtain 14. If the lines are not present along a section of the inflatable curtain 14, then it may have been twisted during mounting. An error message is then generated to indicate an incorrectly mounted, twisted inflatable curtain 14. A manual inspection of the inflatable curtain 14 must then be performed. For data logging purposes, the process may be repeated to verify a correctly mounted inflatable curtain 14.

In the example of Figure 4, the digital image processor is first arranged to search for the stripe making up the indicator 27. When the stripe is present, the image processor can position the locator grids in a direction along an axis at right angles to the stripe, so that each locator grid 35 overlaps the said stripe in predetermined positions along the inflatable curtain 14. If the stripe is present and located within a predetermined distance from a reference position, then the inflatable curtain 14 is correctly mounted. If the stripe is present but located outside a predetermined distance from a reference position then the inflatable curtain 14 is incorrectly mounted. In this case, the distance y exceeds a maximum allowable distance a, whereby an error message is generated to indicate an incorrectly mounted inflatable curtain 14. The error message can also contain additional information, to the effect that the cause of the error message is that a fastener for an attachment tab 24c may be missing or incorrectly mounted. As in the above case, the process may be repeated to verify a correctly mounted inflatable curtain 14.

According to an alternative example, the method is used for determining the presence of an indicator normally located on a hidden, rear surface of the inflatable curtain 14. The indicator can comprise a longitudinal line or stripe along the inflatable curtain, which indicator if desirable can be given a characteristic colour. Examples of characteristic colours suitable for this purpose are luminous or fluorescent colours. If the inflatable curtain is correctly mounted, this indicator will remain hidden. However, should the inflatable curtain become twisted then a digital image processor connected to the camera can easily detect the indicator and generate an alarm signal.

An alternative to using a digital or vision camera for capturing images, a contrast or brightness sensor may be used for identifying the presence of, or lack of, an indicator. A sensor of this type can be defined as a smart sensor that detects parts and or positions of parts by "understanding" what they look like. The sensor can be provided with a light source, such a light emitting diodes (LEDs), for illuminating an object so that a measurement can be made. The output from the sensor is processed by suitable software to determine whether a visible indicator is present or not. An example of such a sensor is Checker © supplied by Cognex^{™}.

Figure 5 shows a plan view of a schematic camera arrangement for implementing the method according to the invention. The figure shows the vehicle body 11 on an assembly line (not shown) after an assembly station where the inflatable curtains 14 have been mounted to the vehicle body 11 adjacent the roof rail 12 thereof. Two digital cameras C_{A}, C_{B} are located adjacent the assembly line on one side of the vehicle and are arranged to capture images of the inflatable curtain 14. An identical camera arrangement (not shown) is provided on the opposite side of the vehicle body 11. The images can be captured while the vehicle body is stopped in a predetermined position or when triggered by a sensor while the vehicle is moving past the cameras. The cameras have an angle of view A, B, respectively, sufficient to cover the entire length of the inflatable curtain 14 through available door openings 15, 19 in the side of the vehicle body 11. After acquiring the images, they are transmitted to a digital image processor in a central processing unit CPU for analysis of the position of the inflatable curtain 14. This procedure has been described in connection with Figure 3 above.

According to an alternative example, the camera arrangement comprises a single digital camera on either side of the vehicle body. The vehicle body is then either stopped in a number of suitable positions to allow the camera to capture images of subsequent sections of the inflatable curtain, or the camera is triggered as predetermined sections of the vehicle body moves past the camera.

A suitable camera for this purpose is a Cognex^{™} DVT515 © made by Cognex^{™}. This camera can be provided with a LTC-50F © lens supplied by the same company. Cognex^{™} supplies a wide range of both black-and-white and colour vision cameras and lenses, as well as software and I/O-modules suitable for this purpose.

The method further involves the use of a computer readable storage device. The computer readable storage device can be integrated in the central processing unit CPU and is intended for use with the method in particular for receiving and storing the input signal from the digital sensing device and/or the processed data or image indicating the state of the mounted airbag arrangement. For this purpose the computer readable storage device contains stored data representing instructions executable by a computer, which instructions comprise:
- instructions for receiving digital input signals from a digital sensing device,
- instructions for processing the digital input signals relating for determining the position of an airbag arrangement
- instructions for automatic storage of retrievable data relating to said position on a data carrier

Hence, the method further allows for automation of the checking procedure and for data logging of the correct positioning and mounting of the arrangement for each individual vehicle. Subsequently, the computer readable storage device allows the digital output in the form of a processed sensor signal and/or one or more images to be digitally stored for future reference. Data relating to the mounting of the airbag and the vehicle chassis number is stored on a data carrier that accompanies each vehicle through the production facility, as well as in a remote database for future reference. The stored data relating to each checking procedure is linked to the identity of the individual vehicle being checked. The data can be retrieved and referenced at any time during the life of the vehicle, or at least during a period of a predetermined number of years. This allows for full traceability with respect to claims relating to possible errors in the mounting of the arrangement.

## Claims

1. A method for detecting correct positioning of an airbag in an occupant restraint system (13) for a vehicle, ***characterized in* that** the method comprises the steps of:
• mounting an airbag (14) having an inlet for connecting the airbag (14) to an inflator (22) in at least one mounting location (24) for mounting the airbag (14) in the vehicle;
• acquiring at least one digital input representing the mounted airbag (14) from a digital sensing device (C_{A}; C_{B});
• determining the presence of at least one digitally detectable indicator (26; 27) on a visible surface of the airbag (14);
• comparing an actual position of the indicator (26; 27) with a desired position;
• generating an error signal if an actual position does not correspond to a desired position.

2. A method according to claim 1, ***characterized in*** determining the presence of said indicator (26; 27) on the airbag (14) in predetermined locations along the airbag (14).

3. A method according to claim 2, ***characterized in*** comparing an actual position of the indicator (26; 27) in each location with a corresponding desired position.

4. A method according to any one of the above claims, ***characterized in*** determining the presence of said indicator (26; 27) on the airbag (14) at least in locations corresponding to attachment points (24) for the airbag (14).

5. A method according to any one of the above claims, ***characterized in*** determining the presence of said indicator (26; 27) on the airbag (14) at least in locations between attachment points (24) for the airbag (14).

6. A method according to any one of the above claims, ***characterized in*** determining the presence of an indicator (26; 27) normally located on a hidden surface of the airbag (14).

7. A method according to any one of the above claims, ***characterized in*** acquiring at least one digital input using at least one brightness or contrast sensor.

8. A method according to any one of the above claims 1-6, ***characterized in*** the at least one digital input being an image captured using at least one digital camera.

9. A method according to claim 8, ***characterized in*** acquiring at least one image of the mounted airbag (14) from within the vehicle.

10. A method according to claim 8, ***characterized in*** acquiring images of the mounted airbag (14) through side openings (15, 19) in the vehicle.

11. A method according to any one of the above claims 8-10, ***characterized in*** determining the presence of at least one indicator (26; 27) on each image of the airbag (14).

12. Occupant restraint system for use with the method according to claim 1, which occupant restraint system comprises an airbag (14), having an inlet for connecting the airbag (14) to an inflator (22), and a predetermined number of attachments (24) for mounting the airbag (14) to a corresponding number of attachment points on a vehicle, ***characterized in* that** the airbag (14) is provided with at least one digitally detectable indicator (26; 27) on at least one external area of the airbag (14).

13. Occupant restraint system according to claim 12, ***characterized in* that** the indicator comprises at least one longitudinal fold line on the outer surface of the airbag (14).

14. Occupant restraint system according to claim 12, ***characterized in* that** the indicator comprises at least one longitudinal fold line on the outer surface of the airbag (14), said fold line being visible through a transparent outer cover.

15. Occupant restraint system according to any one of the above claims 12-14, ***characterized in* that** the indicator (26; 27) comprises at least one marker with a predetermined shape and/or colour on the outer surface of the airbag (14).

16. Occupant restraint system according to claim 15, ***characterized in* that** the number of markers correspond to at least the number of attachment points (24).

17. Occupant restraint system according to claim 15, ***characterized in* that** the at least one marker one or more solid lines along at least part of the length of the airbag (14).

18. Occupant restraint system according to any one of the above claims12-17, ***characterized in* that** the airbag (14) is provided with at least one indicator (26; 27) on an area that is hidden when the airbag (14) is mounted.

19. Computer readable storage device having stored therein data representing instructions executable by a computer, which computer readable storage device is intended for use with the method according to claim 1, ***characterized in*** the said instructions comprising:
• instructions for receiving digital input signals from a digital sensing device (C_{A}; C_{B});
• instructions for processing the digital input signals for determining the position of an airbag arrangement (14);
• instructions for storage of retrievable data relating to said airbag position on a data carrier.

20. Computer readable storage device according to claim 19, ***characterized in*** the instructions further comprising instructions for data logging of the correct positioning and mounting of at least one airbag arrangement (14) for each individual vehicle.

21. Computer readable storage device according to claim 19, ***characterized in*** the instructions further comprising instructions for storing data relating to the mounting of the airbag (14) with a code for identifying the vehicle on the data carrier.

## Patentansprüche

1. Verfahren zum Erfassen der korrekten Positionierung eines Airbags in einem Fahrzeuginsassen-Rückhaltesystem (13) für ein Fahrzeug, **dadurch gekennzeichnet, dass** das Verfahren die folgenden Schritte umfasst:
- Anbringen eines Airbags (14) mit einem Einlass zum Verbinden des Airbags (14) mit einem Gasgenerator (22) an zumindest einem Montageort (24) zum Anbringen des Airbags (14) in dem Fahrzeug;
- Erlangen zumindest einer Digitaleingabe, die den angebrachten Airbag (14) repräsentiert, von einem Digitalfühler (C_{A}; C_{B}) ;
- Bestimmen des Vorhandenseins von zumindest einem digital erfassbaren Indikator (26; 27) auf einer sichtbaren Oberfläche des Airbags (14);
- Vergleichen einer tatsächlichen Position des Indikators (26; 27) mit einer gewünschten Position;
- Erzeugen eines Fehlersignals, falls eine tatsächliche Position nicht einer gewünschten Position entspricht.

2. Verfahren nach Anspruch 1, **gekennzeichnet durch** ein Bestimmen des Vorhandenseins des Indikators (26; 27) auf dem Airbag (14) an vorbestimmten Orten entlang des Airbags (14).

3. Verfahren nach Anspruch 2, **gekennzeichnet durch** ein Vergleichen einer tatsächlichen Position des Indikators (26; 27) an jedem Ort mit einer entsprechenden gewünschten Position.

4. Verfahren nach einem der obigen Ansprüche, **gekennzeichnet durch** ein Bestimmen des Vorhandenseins des Indikators (26; 27) auf dem Airbag (14) zumindest an Orten, die Befestigungspunkten (24) für den Airbag (14) entsprechen.

5. Verfahren nach einem der obigen Ansprüche, **gekennzeichnet durch** ein Bestimmen des Vorhandenseins des Indikators (26; 27) auf dem Airbag (14) zumindest an Orten zwischen Befestigungspunkten (24) für den Airbag (14).

6. Verfahren nach einem der obigen Ansprüche, **gekennzeichnet durch** ein Bestimmen des Vorhandenseins eines Indikators (26; 27), der sich normalerweise auf einer verdeckten Oberfläche des Airbags (14) befindet.

7. Verfahren nach einem der obigen Ansprüche, **gekennzeichnet durch** ein Erlangen zumindest einer Digitaleingabe unter Verwendung zumindest eines Helligkeits- oder Kontrastsensors.

8. Verfahren nach einem der obigen Ansprüche 1 bis 6, **dadurch gekennzeichnet, dass** die zumindest eine Digitaleingabe ein Bild ist, das unter Verwendung zumindest einer Digitalkamera erfasst wird.

9. Verfahren nach Anspruch 8, **gekennzeichnet durch** ein Erlangen zumindest eines Bilds des angebrachten Airbags (14) von innerhalb des Fahrzeugs.

10. Verfahren nach Anspruch 8, **gekennzeichnet durch** ein Erlangen von Bildern des angebrachten Airbags (14) **durch** Seitenöffnungen (15, 19) in dem Fahrzeug.

11. Verfahren nach einem der obigen Ansprüche 8 bis 10, **gekennzeichnet durch** ein Bestimmen des Vorhandenseins von zumindest einem Indikator (26; 27) auf jedem Bild des Airbags (14) .

12. Fahrzeuginsassen-Rückhaltesystem zur Verwendung mit dem Verfahren nach Anspruch 1, welches Fahrzeuginsassen-Rückhaltesystem einen Airbag (14) umfasst, mit einem Einlass zum Verbinden des Airbags (14) mit einem Gasgenerator (22), und eine vorbestimmte Anzahl von Befestigungen (24) zum Anbringen des Airbags (14) an eine entsprechende Anzahl von Befestigungspunkten an einem Fahrzeug, **dadurch gekennzeichnet, dass** der Airbag (14) mit zumindest einem digital erfassbaren Indikator (26; 27) auf zumindest einem äußeren Bereich des Airbags (14) versehen ist.

13. Fahrzeuginsassen-Rückhaltesystem nach Anspruch 12, **dadurch gekennzeichnet, dass** der Indikator zumindest eine Längsfalzlinie auf der äußeren Oberfläche des Airbags (14) umfasst.

14. Fahrzeuginsassen-Rückhaltesystem nach Anspruch 12, **dadurch gekennzeichnet, dass** der Indikator zumindest eine Längsfalzlinie auf der äußeren Oberfläche des Airbags (14) umfasst, wobei die Falzlinie durch eine transparente äußere Abdeckung sichtbar ist.

15. Fahrzeuginsassen-Rückhaltesystem nach einem der obigen Ansprüche 12 bis 14, **dadurch gekennzeichnet, dass** der Indikator (26; 27) zumindest eine Markierung mit einer vorbestimmten Form und/oder Farbe auf der äußeren Oberfläche des Airbags (14) umfasst.

16. Fahrzeuginsassen-Rückhaltesystem nach Anspruch 15, **dadurch gekennzeichnet, dass** die Anzahl von Markierungen zumindest der Anzahl von Befestigungspunkten (24) entspricht.

17. Fahrzeuginsassen-Rückhaltesystem nach Anspruch 15, **dadurch gekennzeichnet, dass** die zumindest eine Markierung eine oder mehr durchgezogene Linien entlang zumindest eines Teils der Länge des Airbags (14).

18. Fahrzeuginsassen-Rückhaltesystem nach einem der obigen Ansprüche 12 bis 17, **dadurch gekennzeichnet, dass** der Airbag (14) mit zumindest einem Indikator (26; 27) auf einem Bereich versehen ist, der verdeckt ist, wenn der Airbag (14) angebracht ist.

19. Computer-lesbares Speichergerät, das darin Daten gespeichert hat, die durch einen Computer ausführbare Befehle repräsentieren, welches Computer-lesbare Speichergerät zur Verwendung mit dem Verfahren nach Anspruch 1 beabsichtigt ist, **dadurch gekennzeichnet, dass** die Befehle umfassen:
- Befehle zum Empfangen digitaler Eingabesignale von einem Digitalfühler (C_{A}; C_{B}) ;
- Befehle zum Verarbeiten der digitalen Eingabesignale zum Bestimmen der Position von einer Airbag-Anordnung (14);
- Befehle zur Speicherung von abrufbaren Daten, die Airbag-Position betreffend, auf einem Datenträger.

20. Computer-lesbares Speichergerät nach Anspruch 19, **dadurch gekennzeichnet, dass** die Befehle ferner Befehle zur Datenerfassung der richtigen Positionierung und dem Anbringen von zumindest einer Airbag-Anordnung (14) für jedes einzelne Fahrzeug umfassen.

21. Computer-lesbares Speichergerät nach Anspruch 19, **dadurch gekennzeichnet, dass** die Befehle ferner Befehle zum Speichern von Daten, das Anbringen des Airbags (14) betreffend, umfassen, mit einem Code zum Identifizieren des Fahrzeugs auf dem Datenträger.

## Revendications

1. Procédé de détection du positionnement correct d'un coussin gonflable de sécurité dans un système de retenue d'occupant (13) d'un véhicule, **caractérisé en ce que** le procédé comprend les étapes de :
montage d'un coussin gonflable de sécurité (14) ayant une entrée pour relier le coussin gonflable de sécurité (14) à un gonfleur (22) dans au moins un emplacement de montage (24) pour monter le coussin gonflable de sécurité (14) dans le véhicule ;
acquisition d'au moins une entrée numérique représentant le coussin gonflable de sécurité montée (14) à partir d'un dispositif de détection numérique (C_{A} ; C_{B}) ;
détermination de la présence d'au moins un indicateur détectable numériquement (26 ; 27) sur une surface visible du coussin gonflable de sécurité (14) ;
comparaison d'une position réelle de l'indicateur (26 ; 27) avec une position désirée ;
génération d'un signal d'erreur si la position réelle ne correspond pas à une position désirée.

2. Procédé selon la revendication 1, **caractérisé par** la détermination de la présence dudit indicateur (26 ; 27) sur le coussin gonflable de sécurité (14) dans des emplacements prédéterminés le long du coussin gonflable de sécurité (14).

3. Procédé selon la revendication 2, **caractérisé par** la comparaison d'une position réelle de l'indicateur (26 ; 27) dans chaque emplacement avec une position désirée correspondante.

4. Procédé selon l'une quelconque des revendications précédentes, **caractérisé par** la détermination de la présence dudit indicateur (26 ; 27) sur le coussin gonflable de sécurité (14) au moins dans des emplacements correspondant à des points de fixation (24) du coussin gonflable de sécurité (14).

5. Procédé selon l'une quelconque des revendications précédentes, **caractérisé par** la détermination de la présence dudit indicateur (26 ; 27) sur le coussin gonflable de sécurité (14) au moins dans des emplacements entre les points de fixation (24) du coussin gonflable de sécurité (14).

6. Procédé selon l'une quelconque des revendications précédentes, **caractérisé par** la détermination de la présence d'un indicateur (26 ; 27) situé normalement sur une surface cachée du coussin gonflable de sécurité (14).

7. Procédé selon l'une quelconque des revendications précédentes, **caractérisé par** l'acquisition d'au moins une entrée numérique utilisant au moins un capteur de luminosité ou de contraste.

8. Procédé selon l'une quelconque des revendications 1 à 6 précédentes, **caractérisé en ce que** l'au moins une entrée numérique est une image capturée en utilisant au moins une caméra numérique.

9. Procédé selon la revendication 8, **caractérisé par** l'acquisition d'au moins une image du coussin gonflable de sécurité monté (14) à partir de l'intérieur du véhicule.

10. Procédé selon la revendication 8, **caractérisé par** l'acquisition d'images du coussin gonflable de sécurité monté (14) à travers des ouvertures latérales (15, 19) dans le véhicule.

11. Procédé selon l'une quelconque des revendications 8 à 10 précédentes, **caractérisé par** la détermination de la présence d'au moins un indicateur (26 ; 27) sur chaque image du coussin gonflable de sécurité (14).

12. Système de retenue d'occupant destinée à une utilisation avec le procédé selon la revendication 1, lequel système de retenue d'occupant comprend un coussin gonflable de sécurité (14), ayant une entrée pour relier le coussin gonflable de sécurité (14) à un gonfleur (22), et un nombre prédéterminé de fixations (24) pour monter le coussin gonflable de sécurité (14) à un nombre correspondant de points de fixation d'un véhicule, **caractérisé en ce que** le coussin gonflable de sécurité (14) est muni d'au moins un indicateur détectable numériquement (26 ; 27) sur au moins une région externe du coussin gonflable de sécurité (14).

13. Système de retenue d'occupant selon la revendication 12, **caractérisé en ce que** l'indicateur comprend au moins une ligne de pli longitudinale sur la surface extérieure du coussin gonflable de sécurité (14).

14. Système de retenue d'occupant selon la revendication 12, **caractérisé en ce que** l'indicateur comprend au moins une ligne de pli longitudinale sur la surface extérieure du coussin gonflable de sécurité (14), ladite ligne de pli étant visible à travers un couvercle extérieur transparent.

15. Système de retenue d'occupant selon l'une quelconque des revendications 12 à 14 précédentes, **caractérisé en ce que** l'indicateur (26 ; 27) comprend au moins un repère avec une forme et/ou couleur prédéterminée sur la surface extérieure du coussin gonflable de sécurité (14).

16. Système de retenue d'occupant selon la revendication 15, **caractérisé en ce que** le nombre de repères correspond au moins au nombre de points de fixation (24).

17. Système de retenue d'occupant selon la revendication 15, **caractérisé en ce que** l'au moins un repère est au moins un ou plusieurs traits pleins le long d'au moins une partie de la longueur du coussin gonflable de sécurité (14).

18. Système de retenue d'occupant selon l'une quelconque des revendications 12 à 17 précédentes, **caractérisé en ce que** le coussin gonflable de sécurité (14) est muni d'au moins un indicateur (26 ; 27) sur une région qui est cachée quand le coussin gonflable de sécurité (14) est monté.

19. Dispositif de stockage lisible par un ordinateur ayant stocké des données représentant des instructions exécutables par un ordinateur, lequel dispositif de stockage lisible par un ordinateur est destiné à une utilisation avec le procédé selon la revendication 1, **caractérisé en ce que** lesdites instructions comprennent :
des instructions pour recevoir des signaux d'entrée numérique provenant d'un dispositif de détection numérique (C_{A} ; C_{B}) ;
des instructions de traitement des signaux d'entrée numérique pour déterminer la position d'un agencement de coussin gonflable de sécurité (14) ;
des instructions de stockage de données récupérables concernant ladite position de coussin gonflable de sécurité sur un support de données.

20. Dispositif de stockage lisible par un ordinateur selon la revendication 19, **caractérisé en ce que** les instructions comprennent en outre des instructions pour l'enregistrement des données de positionnement correct et de montage d'au moins un agencement de coussin gonflable de sécurité (14) pour chaque véhicule individuel.

21. Dispositif de stockage lisible par un ordinateur selon la revendication 19, **caractérisé en ce que** les instructions comprennent en outre des instructions pour stocker des données concernant le montage du coussin gonflable de sécurité (14) avec un code d'identification du véhicule sur le support de données.
